# EUROPEAN PATENT APPLICATION

(11) **EP 4 597 943 A1**
(43) Date of publication of application: **06.08.2025**
(21) Application number: 22959846.1
(22) Date of filing: 27.09.2022
(51) Int. Cl.: H04L 27/00

(54) **METHOD AND APPARATUS FOR DETERMINING EFFECTIVE TIME OF GLOBAL NAVIGATION SATELLITE SYSTEM (GNSS) INFORMATION**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/121812
(87) International publication number: WO 2024/065197

(57) **Abstract**

A method and apparatus for determining effective time of global navigation satellite system (GNSS) information. According to the method and apparatus for determining effective time of GNSS information, a terminal receives configuration information sent by a base station, the configuration information being used for determining to update the effective time of the current GNSS information (102); and determines the effective time of the current GNSS information (103). Communication between the terminal and a network side can be maintained under the condition that the GNSS information is expired, the frequency at which the terminal executes GNSS information measurement is reduced, and the energy consumption of the terminal is reduced.

## Description

### FIELD

The present disclosure relates to the field of wireless communication technology, and particularly to a method and apparatus for determining effective time of global navigation satellite system (GNSS) information.

### BACKGROUND

In a research of wireless communication technology, a satellite communication is considered as an important aspect of future development of the wireless communication technology. The satellite communication refers to a communication conducted by a wireless communication device on the ground using a satellite as a relay. The satellite communication has the following characteristics: a large communication range; a communication between any two points being able to be conducted within a range covered by radio waves emitted by the satellite; not easily being affected by a land disaster (high reliability). The satellite communication, as a supplement to a current terrestrial cellular communication system, can be foreseen to gradually achieve deep integration between the satellite communication system and the terrestrial cellular communication system in a future wireless communication system, and to truly realize the intelligent connection of all things.

In a scenario of the satellite communication, due to a long signal transmission distance between a sender and a receiver, there is a significant delay in a data transmission. For transmissions with an uplink and downlink relationship, a terminal needs to maintain uplink synchronization based on a global navigation satellite system (GNSS) measurement and some auxiliary information. However, in the release 18 (R18) standard of the 3rd generation partnership project (3GPP), when a service with relatively long transmission time is supported, if GNSS information expires, the terminal needs to disconnect a communication connection from a network side, enter an idle (IDLE) state, and perform a GNSS information measurement again. However, in this way, it is unable to keep the GNSS information in a valid state, and thus a continuous communication between the terminal and the network side cannot be supported, which will lead to certain energy consumption.

### SUMMARY

The present disclosure provides a method and apparatus for determining effective time of global navigation satellite system (GNSS) information, which may maintain a communication between a terminal and a network side in a case that the GNSS information expires, reduce a frequency at which the terminal performs a GNSS information measurement, and reduce energy consumption of the terminal.

According to a first aspect of embodiments of the present disclosure, there is provided a method for determining effective time of GNSS information, performed by a terminal, including:
receiving configuration information sent by a base station, in which the configuration information is used to determine to update effective time of current GNSS information; and
determining the effective time of the current GNSS information.

In an embodiment of the present disclosure, before receiving the configuration information sent by the base station, the method further includes:
reporting auxiliary information for determining the effective time of the GNSS information, wherein the auxiliary information includes at least one of a moving speed of the terminal, a moving direction of the terminal, or a validity duration of the current GNSS information.

In an embodiment of the present disclosure, receiving the configuration information sent by the base station includes:
receiving the configuration information sent by the base station before expiration of the current GNSS information, wherein the configuration information includes at least one of a first time length for an effective extension of the current GNSS information or a starting time point of the effective extension.

In an embodiment of the present disclosure, determining the effective time of the current GNSS information includes:
extending the effective time of the current GNSS information from an expiration time point of the current GNSS information and/or the starting time point, wherein an extension length of the effective time is the first time length.

In an embodiment of the present disclosure, receiving the configuration information sent by the base station includes:
receiving the configuration information sent by the base station after expiration of the current GNSS information, wherein the configuration information includes at least one of a second time length for an effective extension of the current GNSS information or a starting time point of the effective extension.

In an embodiment of the present disclosure, determining the effective time of the current GNSS information includes:
extending the effective time of the current GNSS information from the starting time point, wherein an extension length of the effective time is the second time length.

In an embodiment of the present disclosure, the configuration information is carried in a higher-layer signaling or a physical layer signaling.

In an embodiment of the present disclosure, the method further includes:
receiving first indication information sent by the base station, wherein the first indication information instructs to extend the effective time of the current GNSS information.

In an embodiment of the present disclosure, determining the effective time of the current GNSS information further includes:
not receiving first indication information or receiving second indication information sent by the base station;
re-measuring the GNSS information after expiration of the current GNSS information, wherein the second indication information instructs not to extend the effective time of the current GNSS information.

According to a second aspect of embodiments of the present disclosure, there is provided a method for determining effective time of GNSS information, performed by a base station, including:
sending configuration information to a terminal, in which the configuration information is used to determine to update effective time for current GNSS information.

In an embodiment of the present disclosure, the method further includes:
receiving auxiliary information for determining the effective time of the GNSS information reported by the terminal, wherein the auxiliary information includes at least one of a moving speed of the terminal, a moving direction of the terminal, or a validity duration of the current GNSS information

In an embodiment of the present disclosure, the configuration information includes at least one of a first time length for an effective extension of the current GNSS information or a starting time point of the effective extension, sending the configuration information to the terminal includes:
sending the configuration information to the terminal before expiration of the current GNSS information, wherein the configuration information is used for the terminal to extend the effective time of the current GNSS information from an expiration time point of the current GNSS information and/or the starting time point, wherein an extension length of the effective time is the first time length.

In an embodiment of the present disclosure, the configuration information includes at least one of a second time length for an effective extension of the current GNSS information or a starting time point of the effective extension, and sending the configuration information to the terminal includes:
sending the configuration information to the terminal after expiration of the current GNSS information, wherein the configuration information is used for the terminal to extend the effective time of the current GNSS information from the starting time point, wherein an extension length of the effective time is the second time length.

In an embodiment of the present disclosure, sending the configuration information to the terminal includes:
carrying and sending the configuration information through a higher-layer signaling or a physical layer signaling.

In an embodiment of the present disclosure, the method further includes:
sending first indication information to the terminal, wherein the first indication information instructs to extend the effective time of the current GNSS information.

In an embodiment of the present disclosure, the method further includes:
sending second indication information to the terminal, wherein the second indication information instructs not to extend the effective time of the current GNSS information.

According to a third aspect of embodiments of the present disclosure, there is provided a terminal, including:
a receiving module, configured to receive configuration information sent by a base station, wherein the configuration information is used to determine to update effective time of current GNSS information; and
a processing module, configured to determine the effective time of the current GNSS information.

According to a fourth aspect of embodiments of the present disclosure, there is provided a base station, including:
a sending module, configured to send configuration information to a terminal, wherein the configuration information is used to determine to update effective time of current GNSS information.

According to a fifth aspect of embodiments of the present disclosure, there is provided a communication device, including: a transceiver; a memory; a processor connected with the transceiver and the memory respectively. The processor is configured to control the transceiver to receive and send radio signals and configured to implement the method according to the first aspect of embodiments of the present disclosure or the second aspect of embodiments of the present disclosure by executing computer executable instructions on the memory.

According to a sixth aspect of embodiments of the present disclosure, there is provided a computer storage medium. The computer storage medium stores computer executable instructions, and when the computer executable instructions are executed by a processor, the method according to the first aspect of embodiments of the present disclosure or the second aspect of embodiments of the present disclosure is implemented.

According to a sixth aspect of embodiments of the present disclosure, there is provided a communication system, including a terminal and a base station. The terminal is configured to perform the method for determining effective time of global navigation satellite system (GNSS) information according to the first aspect of embodiments of the present disclosure, and the base station is configured to perform the method for determining effective time of GNSS information according to the second aspect of embodiments of the present disclosure.

The present disclosure provides a method and apparatus for determining effective time of global navigation satellite system (GNSS) information. The effective time of the current GNSS information is extended based on the configuration information sent by the base station after expiration of the current GNSS information. In this way, the GNSS information may be maintained in a valid state, a continuous communication between the terminal and the network side may be supported, thereby reducing a frequency at which the terminal performs a GNSS information measurement and reducing energy consumption of the terminal.

The additional aspects and advantages of the present disclosure will be partly set forth in the following description, partly become apparent from the description, or be realized through practice of the present disclosure.

### BRIEF DESCRIPTION OF THE DRAWINGS

The above and/or additional aspects and advantages of the present disclosure will become apparent and easily understood from the following description of the embodiments in conjunction with the accompanying drawings, wherein:
FIG. 1 is a flow chart of a method for determining effective time of global navigation satellite system (GNSS) information according to an embodiment of the present disclosure;
FIG. 2 is a flow chart showing a method for determining effective time of GNSS information according to an embodiment of the present disclosure;
FIG. 3 is a schematic diagram showing an example of extending and determining effective time of current GNSS information based on first configuration information according to an embodiment of the present disclosure;
FIG. 4 is a flow chart showing a method for determining effective time of GNSS information according to an embodiment of the present disclosure;
FIG. 5 is a schematic diagram showing an example of extending and determining effective time of current GNSS information based on second configuration information according to an embodiment of the present disclosure;
FIG. 6 is a flow chart showing a method for determining effective time of GNSS information according to an embodiment of the present disclosure;
FIG. 7 is a flow chart showing a method for determining effective time of GNSS information according to an embodiment of the present disclosure;
FIG. 8 is a flow chart showing a method for determining effective time of GNSS information according to an embodiment of the present disclosure;
FIG. 9 is a timing diagram showing a method for determining effective time of GNSS information according to an embodiment of the present disclosure;
FIG. 10 is a block diagram showing an apparatus for determining effective time of GNSS information according to an embodiment of the present disclosure;
FIG. 11 is a block diagram showing an apparatus for determining effective time of GNSS information according to an embodiment of the present disclosure;
FIG. 12 is a block diagram showing a communication apparatus according to an embodiment of the present disclosure; and
FIG. 13 is a block diagram showing a chip provided by an embodiment of the present disclosure.

### DETAILED DESCRIPTION.

The following describes embodiments of the present disclosure in detail. Examples of the embodiments are shown in the accompanying drawings, and an identical or similar reference numeral represents identical or similar elements or elements with an identical or similar function. The embodiments described with reference to the accompanying drawings are exemplary and are intended to explain the present disclosure, and shall not be construed as a limitation on the present disclosure.

In a scenario of satellite communication, due to a long signal transmission distance between a sender and a receiver, there is a significant delay in a data transmission. For transmissions with an uplink and downlink relationship, a terminal needs to maintain uplink synchronization based on a global navigation satellite system (GNSS) measurement and some auxiliary information. However, in the R18 standard of the 3rd generation partnership project (3GPP), when a service with relatively long transmission time is supported, if GNSS information expires, the terminal needs to disconnect a communication connection from a network side, enter an idle (IDLE) state, and perform a GNSS information measurement again. However, in this way, it is unable to keep the GNSS information in a valid state, and thus a continuous communication between the terminal and the network side cannot be supported, which will lead to certain energy consumption.

Accordingly, the present disclosure provides a method and apparatus for determining effective time of GNSS information, which may maintain a communication between the terminal and the network side in a case that the GNSS information expires, thus reducing a frequency at which the terminal performs the GNSS information measurement and reducing energy consumption of the terminal.

A method and apparatus for determining effective time of GNSS information provided by the present disclosure will be introduced in detail below in conjunction with the accompanying drawings.

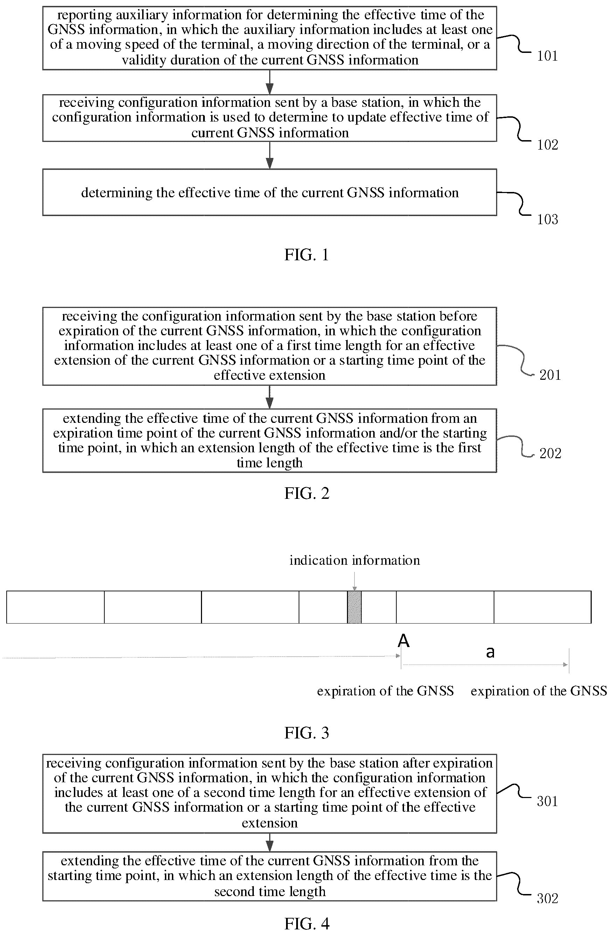

FIG. 1 is a flow chart showing a method for determining effective time of GNSS information according to an embodiment of the present disclosure. As shown in FIG. 1, the method is performed by a terminal and can include the following steps.

In step 101, auxiliary information for determining the effective time of the GNSS information is reported, in which the auxiliary information includes at least one of a moving speed of the terminal, a moving direction of the terminal, or a validity duration of current GNSS information.

In an embodiment of the present disclosure, after performing a GNSS information measurement, the terminal may determine, based on its own situation, auxiliary information related to the validity duration of GNSS information after this GNSS information measurement, such as its own moving speed, moving direction, etc. Furthermore, the terminal may report the auxiliary information to a base station, so that the base station may generate configuration information for extending the effective time of the current GNSS information based on the auxiliary information.

In step 102, the configuration information sent by the base station is received, in which the configuration information is used to determine to update the effective time of the current GNSS information.

The configuration information may include information related to whether to extend the effective time of the current GNSS information and an extension duration. The configuration information is carried and transmitted by the base station through a higher-layer signaling or a physical-layer signaling. The higher-layer signaling may include system information, a radio resource control (RRC) signaling, or a media access control (MAC) control element (CE).

In a specific application scenario, the terminal may receive the configuration information from the base station either before or after expiration of the GNSS information. For example, in an implementation, the terminal may detect the configuration information from the base station within a predefined time period before the expiration of the GNSS information. In a possible implementation, after the expiration of the GNSS information, the terminal may receive the configuration information sent by the base station without entering an IDLE state.

In step 103, the effective time of the current GNSS information is determined.

In an embodiment of the present disclosure, either before or after the current GNSS information becomes invalid, the terminal may determine the effective time of the current GNSS information based on the received configuration information while maintaining a communication connection with the base station (without entering the IDLE state). Alternatively, after the current GNSS information becomes invalid, the terminal may enter the IDLE state and perform the GNSS measurement again to determine the GNSS information.

As a possible implementation, the effective time of the current GNSS information may be extended based on the configuration information after the configuration information is received from the base station. In this implementation, the configuration information may carry an indication for extending the effective time of the current GNSS information. Accordingly, after the configuration information is received, the effective time of the current GNSS information may be directly extended based on the configuration information. Alternatively, the configuration information may not carry the indication for extending the effective time of the current GNSS information. In this case, after receiving the configuration information, the terminal does not directly perform an operation of extending the effective time of the GNSS information. Instead, the terminal needs to receive first indication information which instructs to extend the effective time of the current GNSS information from the base station, and then extends the effective time of the current GNSS information based on the configuration information in response to the first indication information.

As a possible implementation, in response to not receiving the first indication information, or in response to receiving second indication information that instructs not to extend the effective time, after the expiration of the current GNSS information, the terminal may be controlled to enter the IDLE state and simultaneously perform the GNSS measurement again. In this implementation, the terminal performs a GNSS information measurement within a next GNSS measurement window based on a pre-configured or pre-defined GNSS measurement window configuration. The terminal receives a timing adjustment command sent by the base station, determines an uplink timing based on a new timing adjustment command, and executes uplink data transmission.

In summary, according to the method for determining effective time of GNSS information provided by embodiments of the present disclosure, when the GNSS information becomes invalid, the effective time of the GNSS information may be determined by extending or re-measuring the GNSS information, so that the GNSS information may be maintained in a valid state, and a continuous communication between the terminal and the network side is supported, thereby reducing a frequency at which the terminal performs the GNSS information measurement and reducing energy consumption of the terminal.

FIG. 2 is a flow chart showing a method for determining effective time of GNSS information according to an embodiment of the present disclosure. The method is performed by a terminal, based on the embodiment shown in FIG. 1, as shown in FIG. 2, the method may include the following steps.

In step 201, configuration information sent by a base station is received before expiration of current GNSS information, in which the configuration information includes at least one of a first time length for an effective extension of the current GNSS information or a starting time point of the effective extension.

In an embodiment of the present disclosure, the terminal may detect the configuration information from the base station within a predefined time period before the expiration of the GNSS information. The configuration information is carried and transmitted by the base station through a higher-layer signaling or a physical-layer signaling. The higher-layer signaling may include system information, a radio resource control (RRC) signaling, or a media access control (MAC) control element (CE).

In step 202, the effective time of the current GNSS information is extended from an expiration time point of the current GNSS information and/or the starting time point, in which an extension length of the effective time is the first time length.

In an embodiment of the present disclosure, in an implementation, the configuration information sent by the base station is received before the expiration of the current GNSS information, and after the current GNSS information becomes invalid, the terminal may extend an available effective time length of the current GNSS information based on the configuration information. Within the extended effective time, the terminal does not perform the GNSS information measurement operation. As shown in FIG. 3, the terminal receives the configuration information sent by the base station in case of determining that the current GNSS information is about to expire. The configuration information from the base station indicates that an extension length of the effective time is a first time length a, and also indicates that the starting time point of the effective extension is A. Therefore, the terminal may further extend the effective time with the extension length a from the expiration time point of the current GNSS information and/or the starting time point A. Within the extended effective time, the terminal does not perform the GNSS information measurement operation.

In summary, according to the method for determining effective time of GNSS information provided by embodiments of the present disclosure, the configuration information for extending the current GNSS information may be received before the GNSS information becomes invalid, further the effective time of the GNSS information may be extended and determined based on the configuration information, so that the GNSS information may be maintained in a valid state, and a continuous communication between the terminal and the network side is supported, thereby reducing a frequency at which the terminal performs the GNSS information measurement and reducing energy consumption of the terminal.

FIG. 4 is a flow chart showing a method for determining effective time of GNSS information according to an embodiment of the present disclosure. The method is performed by a terminal, based on the embodiment shown in FIG. 1, as shown in FIG. 4, the method may include the following steps.

In step 301, configuration information sent by a base station is received after expiration of current GNSS information, in which the configuration information includes at least one of a second time length for an effective extension of the current GNSS information or a starting time point of the effective extension.

In an embodiment of the present disclosure, the terminal may receive the configuration information from the base station after the expiration of the GNSS information. The configuration information is carried and transmitted by the base station through a higher-layer signaling or a physical-layer signaling. The higher-layer signaling may include system information, a radio resource control (RRC) signaling, or a media access control (MAC) control element (CE).

In step 302, the effective time of the current GNSS information is extended from the starting time point, in which an extension length of the effective time is the second time length.

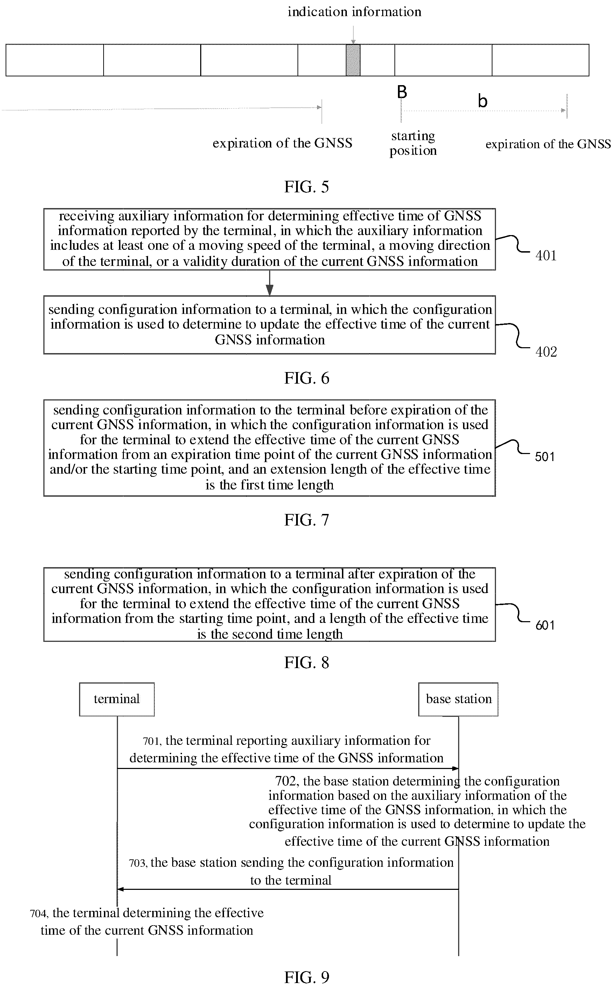

In an embodiment of the present disclosure, in an implementation, after the expiration of the current GNSS information, the terminal is controlled not to enter an IDLE state. After receiving the configuration information sent by the base station, the terminal extends an available effective time length of the current GNSS information from the starting time point indicated by the configuration information. Within the extended effective time, the terminal does not perform a GNSS information measurement operation. As shown in FIG. 5, the terminal receives the configuration information sent by the base station in a case that the terminal determines that the current GNSS information has expired. The configuration information from the base station indicates that the starting time point is B and an extension length of the effective time is a second time length b. Accordingly, the terminal may further extend the effective time with the extension length b from the starting time point B indicated by the configuration information. Within the extended effective time, the terminal does not perform the GNSS information measurement operation.

In summary, according to the method for determining effective time of GNSS information provided by embodiments of the present disclosure, the configuration information for extending the current GNSS information may be received after the GNSS information becomes invalid, and further the effective time of the GNSS information may be extended and determined based on the configuration information, so that it is able to keep the GNSS information in a valid state, and a continuous communication between the terminal and the network side is supported, thereby reducing a frequency at which the terminal performs the GNSS information measurement and reducing energy consumption of the terminal.

FIG. 6 is a flow chart showing a method for determining effective time of GNSS information according to an embodiment of the present disclosure. The method is performed by a base station and may include the following steps.

In step 401, auxiliary information for determining the effective time of the GNSS information reported by a terminal is received, in which the auxiliary information includes at least one of a moving speed of the terminal, a moving direction of the terminal, or a validity duration of the current GNSS information.

In a specific application scenario, after performing a GNSS information measurement, the terminal may determine, based on its own situation, auxiliary information related to the validity duration of GNSS information after this GNSS information measurement, such as its own moving speed, moving direction, etc. Furthermore, the terminal may report the auxiliary information to the base station, so that the base station may receive the auxiliary information and generate the configuration information for extending the effective time of the current GNSS information based on the auxiliary information.

In step 402, the configuration information is sent to the terminal, in which the configuration information is used to determine to update the effective time of the current GNSS information.

The configuration information may include information related to whether to extend the effective time of the current GNSS information and an extension duration. After the configuration information is generated by the base station based on the auxiliary information, the configuration information may be carried and transmitted by the base station to the terminal through a higher-layer signaling or a physical-layer signaling. The higher-layer signaling can include system information, a radio resource control (RRC) signaling, or a media access control (MAC) control element (CE).

In a specific application scenario, the base station may send the configuration information to the terminal either before or after expiration of the GNSS information of the terminal. For example, in an implementation, the base station may send the configuration information to the terminal within a predefined time period before the expiration of the GNSS information. In a possible implementation, the base station may send the configuration information to the terminal that does not enter an IDLE state after the expiration of the GNSS information.

Accordingly, as a possible implementation, the configuration information sent to the terminal may directly carry an indication for extending the effective time of the current GNSS information, so that the terminal may directly extend the effective time of the current GNSS information based on the configuration information after receiving the configuration information. As a possible implementation, the configuration information sent to the terminal may not carry the indication for extending the effective time of the current GNSS information. After the configuration information is sent to the terminal, first indication information which instructs to extend the effective time of the current GNSS information may be further sent to the terminal, so that after receiving the configuration information, the terminal needs to wait for the first indication information sent by the base station, and then extends the effective time of the current GNSS information based on the configuration information in response to the received first indication information.

As a possible implementation, second indication information that instructs not to extend the effective time may be sent to the terminal, so that the terminal may be controlled to enter an IDLE state after the expiration of the current GNSS information, and to re-measure the GNSS information. In this implementation, the terminal performs a GNSS information measurement within a next GNSS measurement window based on a pre-configured or predefined GNSS measurement window configuration. The terminal receives a timing adjustment command from the base station, determines an uplink timing based on a new timing adjustment command, and then executes uplink data transmission.

In summary, according to the method for determining effective time of GNSS information provided by embodiments of the present disclosure, when the GNSS information becomes invalid, by sending the configuration information for extending the GNSS information to the terminal, or indicating the terminal to re-measure the effective time of the GNSS information, the GNSS information may be maintained in a valid state and a continuous communication between the terminal and the network side is supported, thereby reducing a frequency at which the terminal performs the GNSS information measurement and reducing energy consumption of the terminal.

FIG. 7 is a flow chart showing a method for determining effective time of GNSS information according to an embodiment of the present disclosure. The method is performed by a base station, based on the embodiment shown in FIG. 6, as shown in FIG. 7, the method may include the following steps.

In step 501, configuration information is sent to a terminal before expiration of the GNSS information, in which the configuration information is used for the terminal to extend effective time of the current GNSS information from an expiration time point of the current GNSS information and/or a starting time point of an effective extension, and an extension length of the effective time is a first time length.

In an embodiment of the present disclosure, the terminal may send the configuration information to the terminal within a predefined time period before the expiration of the GNSS information, so that after the current GNSS information becomes invalid, the terminal may extend an available effective time length of the current GNSS information from the expiration time point of the current GNSS information and/or the starting time point. The extension length of the effective time is the first time length. Within the extended effective time, the terminal does not perform a GNSS information measurement operation. For a specific implementation process reference may be made to the operations of steps 201 to 202 of the embodiments, which will not be repeated here. The configuration information includes at least one of the first time length for the effective extension of the current GNSS information or the starting time point of the effective extension. The configuration information is carried and transmitted by the base station through a higher-layer signaling or a physical-layer signaling. The higher-layer signaling can include system information, a radio resource control (RRC) signaling, or a media access control (MAC) control element (CE).

In summary, according to the method for determining effective time of GNSS information provided by embodiments of the present disclosure, the configuration information for extending the current GNSS information may be sent to the terminal before the GNSS information becomes invalid, so that the terminal may extend the effective time of the GNSS information based on the configuration information. In this way, the GNSS information may be maintained in a valid state and a continuous communication between the terminal and the network side is supported, thereby reducing a frequency at which the terminal performs the GNSS information measurement and reducing energy consumption of the terminal.

FIG. 8 is a flow chart showing a method for determining effective time of GNSS information according to an embodiment of the present disclosure. The method is performed by a base station, based on the embodiment shown in FIG. 6, as shown in FIG. 8, the method may include the following steps.

In step 601, configuration information is sent to a terminal after expiration of current GNSS information, in which the configuration information is used for the terminal to extend effective time of the current GNSS information from a starting time point of an effective extension, and an extension length of the effective time is a second time length.

In an embodiment of the present disclosure, the base station may send the configuration information to the terminal after the expiration of the GNSS information, so that the terminal may extend an available effective time length of the current GNSS information from the starting time point of the effective extension indicated by the configuration information, in which the extension length of the effective time is the second time length. Within the extended effective time, the terminal does not perform a GNSS information measurement operation. For a specific implementation process reference may be made to the operations of steps 301 to 302 of the embodiments, which will not be repeated here. The configuration information includes at least one of the second time length for the effective extension of the current GNSS information and the starting time point. The configuration information is carried and transmitted by the base station through a higher-layer signaling or a physical-layer signaling. The higher-layer signaling can include system information, a radio resource control (RRC) signaling, or a media access control (MAC) control element (CE).

In summary, according to the method for determining effective time of GNSS information provided by embodiments of the present disclosure, the configuration information for extending the current GNSS information may be sent to the terminal after the GNSS information becomes invalid, so that the terminal may extend the effective time of the GNSS information based on the configuration information. In this way, the GNSS information may be maintained in a valid state, and a continuous communication between the terminal and the network side is supported, thereby reducing a frequency at which the terminal performs the GNSS information measurement and reducing energy consumption of the terminal.

FIG. 9 is a timing diagram showing a method for determining effective time of global navigation satellite system (GNSS) information according to an embodiment of the present disclosure. The method is applied to a communication system for determining effective time of GNSS information. The communication system includes a terminal and a base station. The terminal reports auxiliary information for determining the effective time of the GNSS information, in which the auxiliary information includes at least one of a moving speed of the terminal, a moving direction of the terminal, or a validity duration of the current GNSS information. The base station determines the configuration information based on the auxiliary information of the effective time of the GNSS information. The configuration information is used to extend the effective time of the current GNSS information. The base station sends the configuration information to the terminal. The terminal determines the effective time of the current GNSS information.

As shown in FIG. 9, the method includes the following steps.

In step 701, the terminal reports the auxiliary information for determining the effective time of the GNSS information.

The auxiliary information includes at least one of the moving speed of the terminal, the moving direction of the terminal, or the validity duration of the current GNSS information.

In an embodiment of the present disclosure, after performing a GNSS information measurement, the terminal may determine, based on its own situation, auxiliary information related to the validity duration of the GNSS information after this GNSS information measurement, such as its own moving speed and direction, etc. Furthermore, the terminal may report the auxiliary information to the base station, so that the base station may generate the configuration information for extending the effective time of the current GNSS information based on the auxiliary information.

In step 702, the base station determines the configuration information based on the auxiliary information of the effective time of the GNSS information. The configuration information is used to determine to update the effective time of the current GNSS information.

The configuration information may include information related to whether to extend the effective time of the current GNSS information and an extension duration.

In step 703, the base station sends the configuration information to the terminal.

In an embodiment of the present disclosure, the configuration information is carried and transmitted by the base station through a higher-layer signaling or a physical-layer signaling, after the base station generates the configuration information based on the auxiliary information. The higher-layer signaling may include system information, a radio resource control (RRC) signaling, or a media access control (MAC) control element (CE).

As a possible implementation, the configuration information includes at least one of a first time length for an effective extension of the current GNSS information or a starting time point of the effective extension. As a possible implementation, the configuration information includes at least one of a second time length for the effective extension of the current GNSS information or the starting time point of the effective extension.

In step 704, the terminal determines the effective time of the current GNSS information.

As a possible implementation, the terminal may receive the configuration information sent by the base station before the expiration of the current GNSS information. After the current GNSS information becomes invalid, the terminal may extend an available effective time length of the current GNSS information from the expiration time point of the current GNSS information and/or the starting time point. An extension length of the effective time is the first time length. Within the extended effective time, the terminal does not perform a GNSS information measurement operation.

As a possible implementation, the terminal may receive second configuration information sent by the base station after the expiration of the GNSS information. The available effective time length of the current GNSS information may be extended from the starting time point indicated by the second configuration information. The extension length is the second time length. Within the extended effective time, the terminal does not perform a GNSS information measurement operation.

As a possible implementation, the terminal may be controlled to enter an IDLE state after the expiration of the current GNSS information, and to re-measure the GNSS information simultaneously.

By applying the method for determining effective time of GNSS information provided in the present embodiment, the effective time of the GNSS information may be determined by extending or re-measuring the GNSS information when the GNSS information becomes invalid, so that the GNSS information may be maintained in a valid state, and a continuous communication between the terminal and the network side is supported, thereby reducing a frequency at which the terminal performs the GNSS information measurement and reducing energy consumption of the terminal.

In the above embodiments of the present disclosure, the methods provided by the embodiments of the present disclosure are introduced from the perspectives of the terminal and the base station respectively. In order to implement various functions in the methods provided by the embodiments of the present disclosure, the terminal and the base station each may include a hardware structure or a software module, and implement the above various functions in the form of a hardware structure, a software module, or a hardware structure plus a software module. Any of the above functions may be implemented in the form of a hardware structure, a software module, or a hardware structure plus a software module.

Corresponding to the method for determining effective time of GNSS information provided in the above embodiments, the present disclosure further provides an apparatus for determining effective time of GNSS information. As the apparatus for determining effective time of GNSS information provided in the present disclosure corresponds to the method for determining effective time of GNSS information provided in the above embodiments, the implementations of the method for determining effective time of GNSS information are also applicable to the apparatus for determining effective time of GNSS information provided in the present embodiment, which will not be described in detail in the embodiments of the present disclosure.

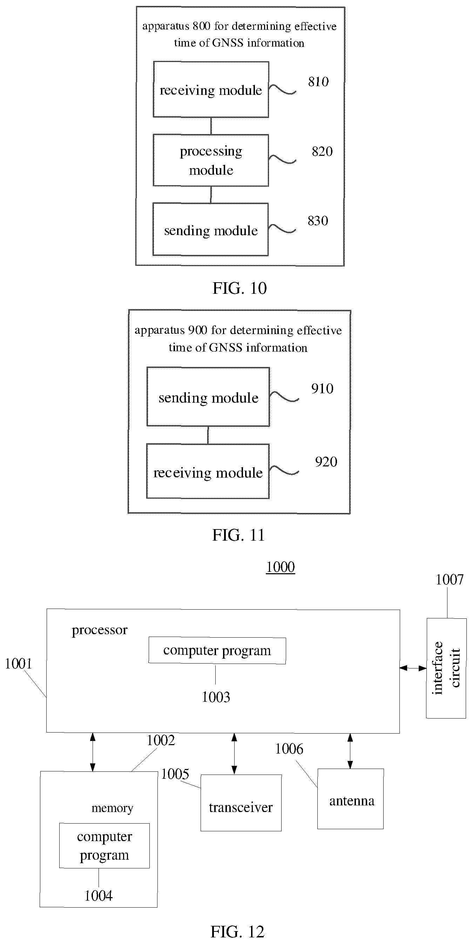

FIG. 10 is a block diagram showing an apparatus 800 for determining effective time of global navigation satellite system (GNSS) information according to an embodiment of the present disclosure, and the apparatus 800 may be a terminal.

As shown in FIG. 10, the apparatus 800 may include:
a receiving module 810, configured to receive configuration information sent by a base station, in which the configuration information is used to determine to update effective time of current GNSS information;
a processing module 820, configured to determine the effective time of the current GNSS information.

In an embodiment of the present disclosure, as shown in FIG. 10, the apparatus 800 further includes: a sending module 830;
The sending module 830 is configured to report auxiliary information for determining the effective time of the GNSS information, in which the auxiliary information includes at least one of a moving speed of the terminal, a moving direction of the terminal, or a validity duration of the current GNSS information.

In an embodiment of the present disclosure, the receiving module 810 is configured to receive the configuration information sent by the base station before expiration of the current GNSS information, in which the configuration information includes at least one of a first time length for an effective extension of the current GNSS information or a starting time point of the effective extension.

In an embodiment of the present disclosure, the processing module 820 is configured to extend the effective time of the current GNSS information from an expiration time point of the current GNSS information and/or the starting time point, in which an extension length of the effective time is the first time length.

In an embodiment of the present disclosure, the receiving module 810 is configured to receive the configuration information sent by the base station after expiration of the current GNSS information, in which the configuration information includes at least one of a second time length for an effective extension of the current GNSS information or a starting time point of the effective extension.

In an embodiment of the present disclosure, the processing module 820 is configured to extend the effective time of the current GNSS information from the starting time point, in which an extension length of the effective time is the second time length.

In an embodiment of the present disclosure, the configuration information is carried in a higher-layer signaling or a physical layer signaling.

In an embodiment of the present disclosure, the receiving module 810 is configured to receive first indication information sent by the base station, in which the first indication information instructs to extend the effective time of the current GNSS information.

In an embodiment of the present disclosure, the processing module 820 is configured to, in response to not receiving first indication information or receiving second indication information sent by the base station, re-measure the GNSS information after expiration of the current GNSS information, in which the second indication information instructs not to extend the effective time of the current GNSS information.

FIG. 11 is a block diagram showing an apparatus 900 for determining effective time of global navigation satellite system (GNSS) information according to an embodiment of the present disclosure, and the apparatus 900 may be a base station.

As shown in FIG. 11, the apparatus 900 may include:
a sending module 910, configured to send configuration information to a terminal, in which the configuration information is used to determine to update effective time of current GNSS information.

In an embodiment of the present disclosure, as shown in FIG. 11, the apparatus 900 further includes: a receiving module 920;
The receiving module 920 is configured to receive auxiliary information for determining the effective time of the GNSS information reported by the terminal, in which the auxiliary information includes at least one of a moving speed of the terminal, a moving direction of the terminal, or a validity duration of the current GNSS information.

In an embodiment of the present disclosure, the configuration information includes at least one of a first time length for an effective extension of the current GNSS information or a starting time point of the effective extension. The sending module 910 is configured to send the configuration information to the terminal before expiration of the current GNSS information, in which the configuration information is used for the terminal to extend the effective time of the current GNSS information from an expiration time point of the current GNSS information and/or the starting time point, and an extension length of the effective time is the first time length.

In an embodiment of the present disclosure, the configuration information includes at least one of a second time length for an effective extension of the current GNSS information and a starting time point. The sending module 910 is configured to send the configuration information to the terminal after expiration of the current GNSS information, in which the configuration information is used for the terminal to extend the effective time of the current GNSS information from the starting time point, and an extension length of the effective time is the second time length.

In an embodiment of the present disclosure, the sending module 910 is configured to carry and send the configuration information through a higher-layer signaling or a physical layer signaling.

In an embodiment of the present disclosure, the sending module 910 is configured to send first indication information to the terminal, in which the first indication information instructs to extend the effective time of the current GNSS information.

In an embodiment of the present disclosure, the sending module 910 is configured to send second indication information to the terminal, in which the second indication information instructs not to extend the effective time of the current GNSS information.

As shown in FIG. 12, FIG. 12 is a block diagram showing a communication apparatus 1000 according to an embodiment of the present disclosure. The communication apparatus 1000 can be a network device, a UE, or a chip, a chip system or a processor that supports the network device to realize the above-described methods, or a chip, a chip system or a processor that supports the UE to realize the above-described methods. The apparatus may be configured to realize the methods described in the above method embodiments, and for details, please refer to the descriptions of the above-described method embodiments.

The communication apparatus 1000 may include one or more processors 1001. The processor 1001 may be a general purpose processor or a dedicated processor, such as, a baseband processor or a central processor. The baseband processor is configured to process a communication protocol and communication data. The central processor is configured to control the communication apparatus (e.g., a base station, a baseband chip, a terminal, a terminal chip, a central unit (CU) or a distributed unit (DU)), to executing a computer program, and to process data of the computer program.

Optionally, the communication apparatus 1000 may further include one or more memories 1002, on which a computer program 1004 may be stored. The processor 1001 executes the computer program 1004 to cause the communication apparatus 1000 to perform the methods described in the above method embodiments. Alternatively, data may also be stored in the memory 1002. The communication apparatus 1000 and the memory 1002 may be provided separately or may be integrated together.

Optionally, the communication apparatus 1000 may further include a transceiver 1005 and an antenna 1006. The transceiver 1005 may be referred to as a transceiver unit, a transceiver machine, or a transceiver circuit, etc., and may be used to implement a receiving and sending function. The transceiver 1005 may include a receiver and a transmitter. The receiver may be referred to as a receiver machine or a receiving circuit, for realizing a receiving function. The transmitter may be referred to as a sender machine or sending circuit, for realizing the sending function.

Optionally, the communication apparatus 1000 may further include one or more interface circuits 1007. The interface circuit 1007 is used to receive code instructions and transmit the code instructions to the processor 1001. The processor 1001 executes code instructions to cause the communication apparatus 1000 to perform the method described in the method embodiments.

In an implementation, the processor 1001 may include a transceiver for implementing the receiving and sending function. For example, the transceiver may be a transceiver circuit, or an interface, or an interface circuit. The transceiver circuit, interface, or interface circuitry for implementing the receiving and sending function may be separated, or may be integrated together. The transceiver circuit, interface, or interface circuit described above may be configured for code/data reading and writing, or may be configured for signal sending or delivery.

In an implementation, the processor 1001 may store the computer program 1003, and the computer program 1003 may run on the processor 1001 to cause the communication apparatus 1000 to perform the methods described in the above method embodiments. The computer program 1003 may be solidified in the processor 1001, in which case the processor 1001 can be implemented by hardware.

In an implementation, the communication apparatus 1000 may include circuits. The circuits may implement the sending, receiving or communicating function in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus described in the above embodiments can be a network device or a UE, but the scope of the communication apparatus described in the present disclosure is not limited thereto, and the structure of the communication apparatus may not be limited by FIG. 12. The communication apparatus may be a stand-alone device or a part of a larger device. For example, the communication apparatus may be:
(1) a stand-alone IC, a chip, a chip system or a subsystem;
(2) a collection of ICs including one or more ICs, where alternatively, the collection of ICs may also include storage components for storing data and a computer program;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

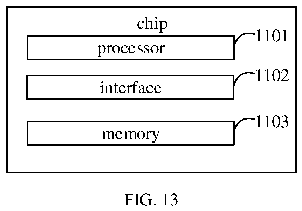

For the case where the communication apparatus may be the chip or the chip system, reference can be made to a block diagram of the chip shown in FIG. 13. The chip shown in FIG. 13 includes a processor 1101 and an interface 1102. There may be one or more processors 1101, and there may be multiple interfaces 1102.

Optionally, the chip further includes a memory 1103, which is used to store necessary computer program and data.

It is understood by those skilled in the art that various illustrative logical blocks and steps listed in embodiments of the disclosure can be implemented by electronic hardware, computer software, or a combination of both. Whether such function is implemented by hardware or software depends on a particular application and a design requirement of an entire system. Those skilled in the art can use various methods to implement the described function for each particular application, but such implementation should not be construed as being beyond the scope of protection of embodiments of the disclosure.

The present disclosure further provides a readable storage medium for storing instructions. When the instructions are executed by a computer, the function of any of the method embodiments described above is implemented.

The present disclosure further provides a computer program product. When the computer program product is executed by a computer, the function of any of the method embodiments described above is implemented.

The above embodiments may be implemented in whole or in part by software, hardware, firmware, or any combination of both. When implemented using software, the above embodiments may be implemented, in whole or in part, in the form of the computer program product. The computer program product includes one or more computer programs. When the computer program is loaded and executed on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

The terms "machine-readable medium" and "computer-readable medium" as used herein refer to any computer program product, device, and/or apparatus that is used to provide machine instructions and/or data to a programmable processor (e.g., a disk, a CD, a memory, a programmable logic device (PLD)), including machine-readable media that receive machine instructions as a machine-readable signal. The term "machine-readable signal" refers to any signal used to provide the machine instructions and/or data to the programmable processor.

The system and technology described here can be implemented in a computing system that include back-end components (e.g., as a data server), or a computing system that includes a middleware component (e.g., an application server), or a computing system that include a front-end component (e.g., a user computer with a graphical user interface or a web browser, through which a user can interact with the implementation of the system and technology described here), or a computing system that includes any combination of such back-end, middleware, or front-end components. The component of the system can be interconnected through any form or medium of digital data communication (e.g., a communication network). An example of the communication network includes local area networks (LAN), wide area network (WAN), and the Internet.

The computer system may include a client and a server. The client and the server are generally far apart from each other and typically interact through a communication network. A client-server relationship is generated by a computer program that runs on a corresponding computer and has a client-server relationship with each other.

It should be understood that the various forms of processes shown above can be used, with steps re-ordered, added, or deleted. For example, the steps described in the present disclosure can be executed in parallel, sequentially, or in a different order, as long as the desired results of the technical solution disclosed herein are achieved, and this text does not limit such execution.

Furthermore, it should be understood that each embodiment of the present disclosure can be implemented separately or in combination with other embodiments, as permitted by the technical solution.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in hardware or software way depends on the particular application and design constraints of the technical solution. Those skilled in the art may use different ways to implement the described functions for each particular application, but such implementations should not be considered as beyond the scope of the disclosure.

It is clearly understood by those skilled in the field that, for the convenience and brevity of description, for detailed work processes of the systems, apparatuses, and units described above reference may be made to the corresponding processes in the above method embodiments, which are not be repeated here.

The above is only detailed implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for determining effective time of global navigation satellite system (GNSS) information, performed by a terminal, comprising:
receiving configuration information sent by a base station, wherein the configuration information is used to determine to update effective time of current GNSS information; and
determining the effective time of the current GNSS information.

2. The method according to claim 1, further comprising:
reporting auxiliary information for determining the effective time of the GNSS information, wherein the auxiliary information comprises at least one of a moving speed of the terminal, a moving direction of the terminal, or a validity duration of the current GNSS information.

3. The method according to claim 1, wherein receiving the configuration information sent by the base station comprises:
receiving the configuration information sent by the base station before expiration of the current GNSS information, wherein the configuration information comprises at least one of a first time length for an effective extension of the current GNSS information or a starting time point of the effective extension.

4. The method according to claim 3, wherein determining the effective time of the current GNSS information comprises:
extending the effective time of the current GNSS information from an expiration time point of the current GNSS information and/or the starting time point, wherein an extension length of the effective time is the first time length.

5. The method according to claim 1, wherein receiving the configuration information sent by the base station comprises:
receiving the configuration information sent by the base station after expiration of the current GNSS information, wherein the configuration information comprises at least one of a second time length for an effective extension of the current GNSS information or a starting time point of the effective extension.

6. The method according to claim 5, wherein determining the effective time of the current GNSS information comprises:
extending the effective time of the current GNSS information from the starting time point, wherein an extension length of the effective time is the second time length.

7. The method according to claim 1, wherein the configuration information is carried in a higher-layer signaling or a physical layer signaling.

8. The method according to any one of claims 3 to 6, further comprising:
receiving first indication information sent by the base station, wherein the first indication information instructs to extend the effective time of the current GNSS information.

9. The method according to claim 1, wherein determining the effective time of the current GNSS information further comprises:
not receiving first indication information or receiving second indication information sent by the base station; and
re-measuring the GNSS information after expiration of the current GNSS information, wherein the second indication information instructs not to extend the effective time of the current GNSS information.

10. A method for determining effective time of global navigation satellite system (GNSS) information, performed by a base station, comprising:
sending configuration information to a terminal, wherein the configuration information is used to determine to update effective time of current GNSS information.

11. The method according to claim 10, further comprising:
receiving auxiliary information for determining the effective time of the GNSS information reported by the terminal, wherein the auxiliary information comprises at least one of a moving speed of the terminal, a moving direction of the terminal, or a validity duration of the current GNSS information.

12. The method according to claim 11, wherein the configuration information comprises at least one of a first time length for an effective extension of the current GNSS information or a starting time point of the effective extension, and sending the configuration information to the terminal comprises:
sending the configuration information to the terminal before expiration of the current GNSS information, wherein the configuration information is used for the terminal to extend the effective time of the current GNSS information from an expiration time point of the current GNSS information and/or the starting time point, and an extension length of the effective time is the first time length.

13. The method according to claim 11, wherein the configuration information comprises at least one of a second time length for an effective extension of the current GNSS information or a starting time point of the effective extension, and sending the configuration information to the terminal comprises:
sending the configuration information to the terminal after expiration of the current GNSS information, wherein the configuration information is used for the terminal to extend the effective time of the current GNSS information from the starting time point, wherein an extension length of the effective time is the second time length.

14. The method according to claim 12 or 13, wherein sending the configuration information to the terminal comprises:
carrying and sending the configuration information through a higher-layer signaling or a physical layer signaling.

15. The method according to claim 10, further comprising:
sending first indication information to the terminal, wherein the first indication information instructs to extend the effective time of the current GNSS information.

16. The method according to claim 10, further comprising:
sending second indication information to the terminal, wherein the second indication information instructs not to extend the effective time of the current GNSS information.

17. A terminal, comprising:
a receiving module, configured to receive configuration information sent by a base station, wherein the configuration information is used to determine to update effective time of current global navigation satellite system (GNSS) information; and
a processing module, configured to determine the effective time of the current GNSS information.

18. A base station, comprising:
a sending module, configured to send configuration information to a terminal, wherein the configuration information is used to determine to update effective time of current global navigation satellite system (GNSS) information.

19. A communication device, comprising:
a transceiver;
a memory;
a processor connected with the transceiver and the memory respectively, wherein the processor is configured to control the transceiver to receive and send radio signals and configured to implement the method according to any of claims 1-16 by executing computer executable instructions on the memory.

20. A computer storage medium, wherein the computer storage medium stores computer executable instructions, and when the computer executable instructions are executed by a processor, the method according to any of claims 1-16 is implemented.

21. A communication system, comprising a terminal and a base station, wherein the terminal is configured to perform the method according to any of claims 1-9, and the base station is configured to perform the method according to any of claims 10-16.
